# EUROPEAN PATENT SPECIFICATION

(11) **EP 4 299 929 B1**
(45) Date of publication and mention of the grant of the patent: **21.05.2025**
(21) Application number: 23735219.0
(22) Date of filing: 17.03.2023
(51) Int. Cl.: F16B 35/04

(54) **BANJO BOLT**
BANJOSCHRAUBENBOLZEN
BOULON CREUX

(30) Priority: 16.05.2022 JP 2022080071
(43) Date of publication of application: 03.01.2024
(73) Proprietor: Matsumoto Heavy Industry Co., Ltd., Kure-shi, Hiroshima 737-1207 (JP)
(72) Inventor: YOKOTA, Koichi, Kure-shi, Hiroshima 737-1207 (JP); SHIMOKAWA, Shinya, Kure-shi, Hiroshima 737-1207 (JP); ITOHARA, Hironobu, Kure-shi, Hiroshima 737-1207 (JP)
(74) Representative: HGF
(86) International application number: PCT/JP2023/010621
(87) International publication number: WO 2023/223651

(56) References cited:
- JP-A- 2001 289 227
- JP-A- 2014 118 026
- JP-A- 2019 065 881

## Description

### TECHNICAL FIELD

The present disclosure relates to a banjo bolt.

### BACKGROUND ART

Patent Document 1 discloses a union bolt. The union bolt of Patent Document 1 includes a head portion, and a shaft portion provided at a lower end of the head portion and provided with an external thread groove on an outer peripheral surface thereof. The shaft portion includes a vertical hole provided inside the shaft portion and through which the fluid flows in a direction substantially along an axial direction, and a lateral hole provided substantially orthogonal to the axial direction so that the vertical hole can communicate with an outside.

### CITATION LIST

### PATENT DOCUMENT

Patent Document 1: JP 2001-289227 A

### SUMMARY

### PROBLEMS TO BE SOLVED

In the union bolt of Patent Document 1, in order to increase tightening axial force, for example, it is conceivable to decrease an inner diameter of the vertical hole. However, when the inner diameter of the vertical hole is decreased, a dimension of a portion of the shaft portion where the lateral hole is formed increases, and it may be difficult to shape the lateral hole having a small diameter by press working.

An object of the present disclosure is to provide a banjo bolt in which a lateral hole having a small diameter can be formed by press working while a decrease in fastening axial force is suppressed.

### SOLUTION TO PROBLEM

A banjo bolt according to one aspect of the present disclosure includes
a head portion, and
a cylindrical shaft portion including a vertical hole extending in the first direction inside the shaft portion, wherein
the head portion is connected to a first end of the shaft portion in the first direction,
an opening connected to the vertical hole is provided at a second end of the shaft portion in the first direction, and
the shaft portion includes
   at least one groove portion provided on an inner surface of the vertical hole, the groove portion extending along the first direction and being recessed in a second direction intersecting the first direction and in a direction away from a center line of the vertical hole extending in the first direction, and
   a lateral hole provided in a bottom portion of the groove portion, the lateral hole extending in the second direction and connecting the vertical hole and an outside of the shaft portion.

### ADVANTAGEOUS EFFECTS OF INVENTION

According to the banjo bolt of the above aspect, it is possible to form a lateral hole having a small diameter by press working while a decrease in fastening axial force is suppressed.

### BRIEF DESCRIPTION OF THE DRAWINGS

FIG. 1 is a perspective view showing a banjo bolt according to one embodiment of the present disclosure.
FIG. 2 is a perspective view including a partial cross section of the banjo bolt of FIG. 1.
FIG. 3 is a cross-sectional view taken along line **III-III** of FIG. 2.
FIG. 4 is a perspective view including a partial cross section showing a first modification of the banjo bolt of FIG. 1.
FIG. 5 is a perspective view including a partial cross section showing a second modification of the banjo bolt of FIG. 1.
FIG. 6 is a perspective view including a partial cross section showing a third modification of the banjo bolt of FIG. 1.

### DETAILED DESCRIPTION

Hereinafter, an example of the present disclosure will be described with reference to the accompanying drawings. Note that the following description is merely exemplary in nature, and is not intended to limit the present disclosure, its application, or its use. Furthermore, the drawings are schematic, and ratios of dimensions and the like do not necessarily match actual ones.

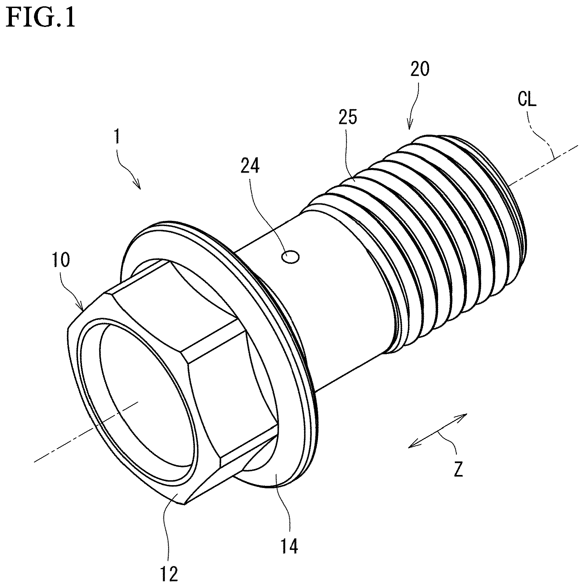

As shown in FIG. 1, a banjo bolt (also referred to as union bolt) 1 according to one embodiment of the present disclosure includes a head portion 10 and a cylindrical shaft portion 20. The banjo bolt 1 is made of, for example, carbon steel, alloy steel, boron steel, stainless steel, aluminum, or the like. The shaft portion 20 has, for example, a substantially cylindrical shape and extends along a first direction (for example, in the Z direction,).

As illustrated in FIG. 1, the head portion 10 includes, for example, a screw head 12 having a substantially hexagonal columnar shape and a flange 14, and is provided at one end of the shaft portion 20 in the first direction Z. The screw head 12 is located farther from the other end of the shaft portion 20 in the first direction Z than the flange 14. The flange 14 has, for example, a substantially annular shape and is located around a center line CL extending in the first direction Z of the shaft portion 20.

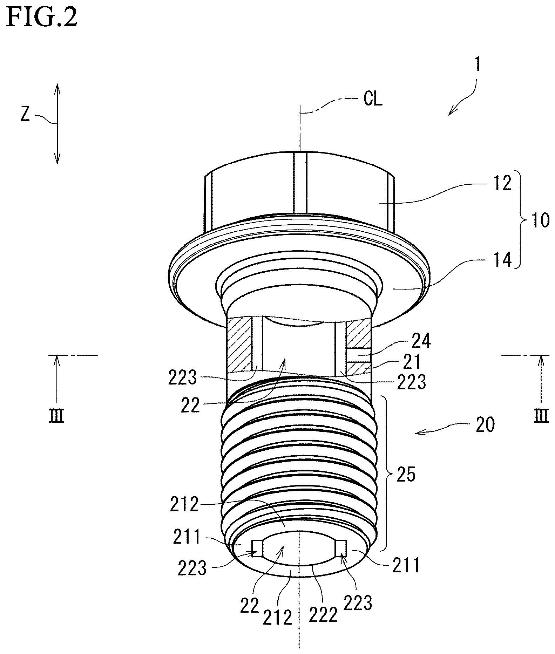

As illustrated in FIG. 2, the shaft portion 20 has, for example, a substantially cylindrical shape, and internally includes a vertical hole 22 extending along the first direction Z. The vertical hole 22 has, for example, a substantially circular shape, extends from the head portion 10 to the other end of the shaft portion 20 in the first direction Z, and is connected to an opening 222 provided at the other end of the shaft portion 20 in the first direction Z. The vertical hole 22 is shaped in the shaft portion 20 by, for example, cold casting. The shape of the vertical hole 22 is not limited to a substantially circular shape, and may be any other shape.

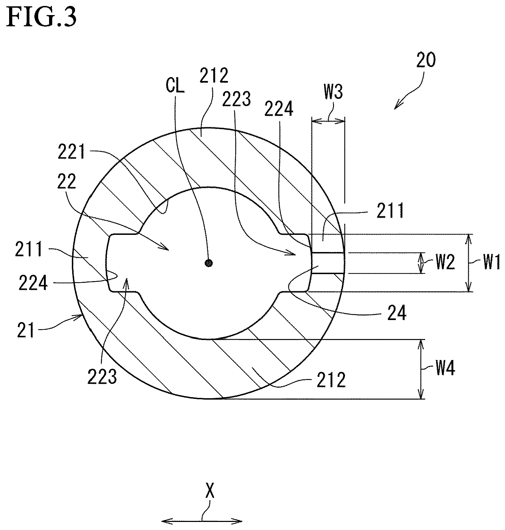

As illustrated in FIG. 3, the shaft portion 20 includes at least one groove portion 223 and a lateral hole 24 provided in a bottom portion 224 of the groove portion 223. The groove portion 223 is provided on the inner surface of the vertical hole 22, more specifically, on a peripheral wall portion 21 of the shaft portion 20 constituting the inner surface of the vertical hole 22. **In** the present embodiment, as an example, the shaft portion 20 includes two groove portions 223 and two lateral holes 24 located symmetrically with respect to the center line CL extending in the first direction Z of the vertical hole 22.

Each groove portion 223 extends along the first direction Z and is recessed in a second direction (for example, in the X direction) intersecting the first direction and in a direction away from the center line CL. As an example, each groove portion 223 includes a cross section intersecting the center line CL, the cross section being substantially uniform from one end to the other end in the first direction Z. **In** the present embodiment, one lateral hole 24 is provided in only one of the two groove portions 223.

A portion constituting the bottom portion 224 of each groove portion 223 in the peripheral wall portion 21 of the shaft portion 20 is defined as a thin portion 211, and a portion other than the thin portion 211 in the peripheral wall portion 21 of the shaft portion 20 is defined as a thick portion 212. **In** the present embodiment, the ratio of a thickness of the thin portion 211 to a thickness of the thick portion 212 (for example, W3/W4) is preferably larger than zero and smaller than 1. The thin portion 211 and the thick portion 212 are alternately positioned in the circumferential direction with respect to the center line CL. The thicknesses of the thin portion 211 and the thick portion 212 are dimensions of the peripheral wall portion 21 in a direction intersecting the first direction Z (in the present embodiment, in the radial direction with respect to the center line CL).

The lateral hole 24 extends through the peripheral wall portion 21 of the shaft portion 20 in the second direction to connect the vertical hole 22 and an outside of the shaft portion 20. The lateral hole 24 has, for example, a substantially circular shape, and is provided at an arbitrary position of the bottom portion 224 of the groove portion 223. The lateral hole 24 is formed in the shaft portion 20 by, for example, press working. The shape of the lateral hole 24 is not limited to a substantially circular shape, and may be any other shape.

When viewed along the first direction Z, a dimension in the circumferential direction with respect to the center line CL of the bottom portion 224 of the groove portion 223 is defined as W1, and a dimension in the circumferential direction with respect to the center line CL of the lateral hole 24 is defined as W2. In the present embodiment, a ratio (= W1/W2) of the lateral hole 24 to the bottom portion 224 of the groove portion 223 when viewed along the first direction Z is larger than zero and equal to or smaller than 1.

As illustrated in FIG. 1, the shaft portion 20 includes an external threaded portion 25 located at the other end in the first direction Z. The external threaded portion 25 is provided on an outer surface around the center line CL of the shaft portion 20.

The banjo bolt 1 can exhibit the following advantageous effects.

The banjo bolt 1 includes the head portion 10 and the shaft portion 20 including the vertical hole 22 extending along the first direction Z. The head portion 10 is connected to one end of the shaft portion 20 in the first direction Z. The opening 222 connected to the vertical hole 22 is provided at the other end of the shaft portion 20 in the first direction Z. The shaft portion 20 includes at least one groove portion 223 and the lateral hole 24. The at least one groove portion 223 is provided on the inner surface of the vertical hole 22, extends in the first direction Z, and is recessed in the second direction intersecting the first direction Z and in a direction away from the center line CL extending in the first direction Z of the vertical hole 22. The lateral hole 24 is provided in the bottom portion 224 of the groove portion 223 and extends in the second direction to connect the vertical hole 22 and the outside of the shaft portion 20. With such a configuration, since only the portion where the lateral hole 24 is formed in the thickness of the peripheral wall portion 21 of the shaft portion 20 is thin, it is possible to realize the banjo bolt 1 in which a lateral hole having a small diameter can be formed by press working while a decrease in fastening axial force (in other words, surface pressure) is suppressed.

In general, when the lateral hole 24 is formed by press working, a piercing punch is used. For example, when the lateral hole 24 is formed in the thick portion 212 of the peripheral wall portion 21, a processing load necessary for processing the lateral hole 24 increases as compared with the case where the lateral hole 24 is formed in the thin portion 211. When the processing load exceeds material strength of the piercing punch, the piercing punch is broken (= exceeds processing limit), and thus the following disadvantages may occur. Since the banjo bolt 1 can be formed by press working, occurrence of such a disadvantage can be avoided.
· It is necessary to use a processing unit (for example, drilling) whose processing cost is higher than that of press working, and a manufacturing cost of the banjo bolt increases.
· For example, since burrs and barbs are more likely to occur in drilling than in press working, a quality problem of foreign matter contamination increases.

The groove portion 223 includes a cross section intersecting the center line CL, the cross section being substantially uniform from one end to the other end in the first direction Z. With such a configuration, the banjo bolt 1 having uniform fastening axial force can be realized.

Assuming that a portion constituting the bottom portion 224 of the groove portion 223 of the shaft portion 20 is the thin portion 211 and a portion other than the thin portion 211 of the shaft portion 20 is the thick portion 212, a ratio of a thickness of the thin portion 211 to a thickness of the thick portion 212 is larger than zero and smaller than 1. With such a configuration, it is possible to more reliably realize the banjo bolt 1 in which a lateral hole having a small diameter can be formed by press working while a decrease in fastening axial force is suppressed.

A ratio of the lateral hole 24 to the bottom portion 224 of the groove portion 223 when viewed along the first direction Z is larger than zero and equal to or smaller than 1. With such a configuration, it is possible to more reliably realize the banjo bolt 1 in which a lateral hole having a small diameter can be formed by press working while a decrease in fastening axial force is suppressed.

The shaft portion 20 has a plurality of groove portions 223, and the plurality of groove portions 223 are located symmetrically with respect to the center line CL. With such a configuration, a plurality of lateral holes 24 can be formed in the shaft portion 20.

The banjo bolt 1 may be configured as follows.

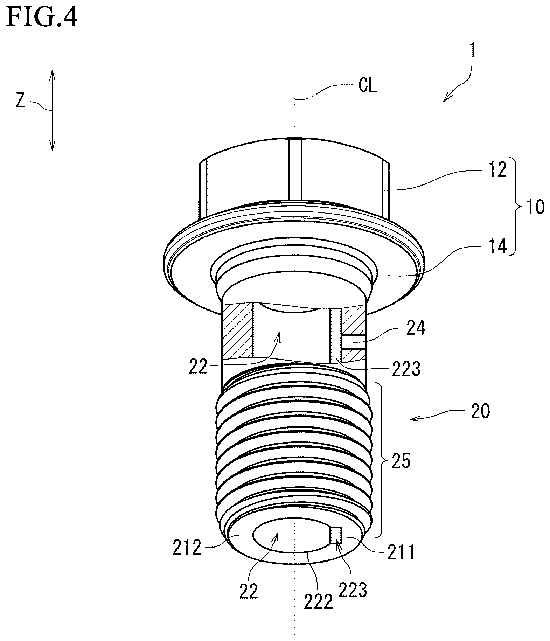

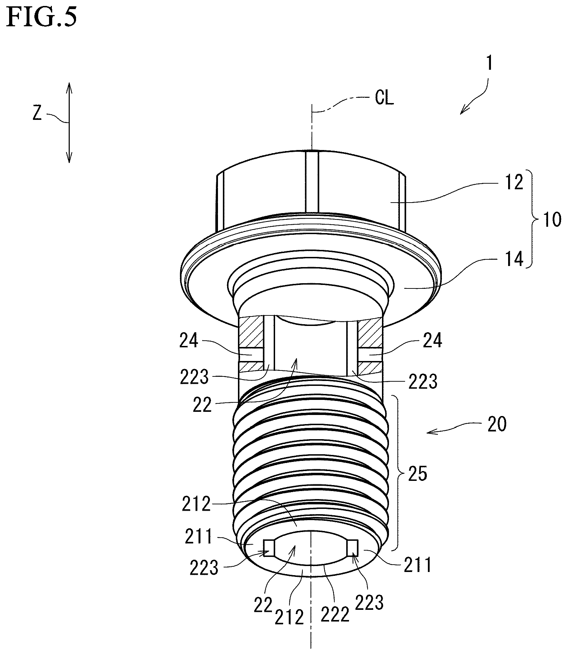

The shaft portion 20 only needs to include at least one groove portion 223. For example, as illustrated in FIG. 4, one groove portion 223 may be provided in the shaft portion 20. As illustrated in FIG. 5, two groove portions 223 may be provided in the shaft portion 20. Although not illustrated, three or more grooves portions 223 may be provided in the shaft portion 20.

The shaft portion 20 only needs to include at least one lateral hole 24. For example, as illustrated in FIG. 5, one lateral hole 24 may be provided in each of the plurality of groove portions 223. Although not illustrated, a plurality of lateral holes 24 may be provided in one groove portion223.

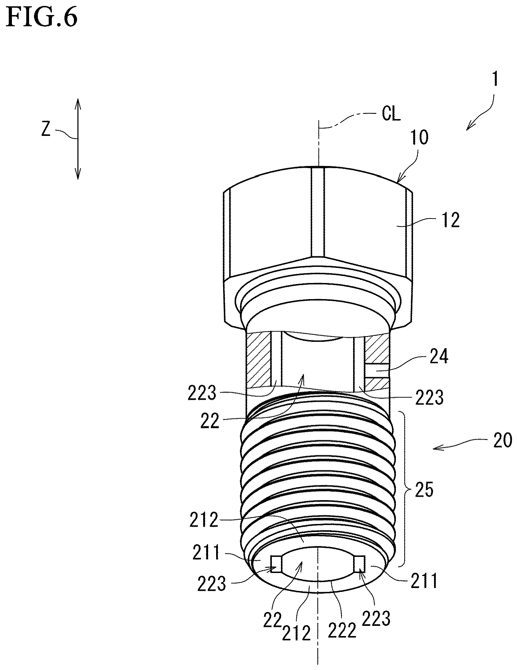

The head portion 10 may adopt any shape and configuration. For example, the shape of the screw head 12 is not limited to a substantially hexagonal prism, and may be a hexalobular, twelve-point, triple square, or the like. As illustrated in FIG. 6, the head portion 10 may have a configuration in which the flange 14 is omitted.

Various embodiments of the present disclosure have been described above in detail with reference to the drawings. Finally, various aspects of the present disclosure will be described.

A banjo bolt according to a first aspect of the present disclosure includes
a head portion, and
a cylindrical shaft portion including a vertical hole, the vertical hole extending in a first direction and being provided inside the shaft portion, wherein
the head portion is connected to one end of the shaft portion in the first direction,
an opening connected to the vertical hole is provided at the other end of the shaft portion in the first direction, and
the shaft portion includes
   at least one groove portion provided on an inner surface of the vertical hole, the groove portion extending along the first direction, and being recessed in a second direction intersecting the first direction and in a direction away from a center line of the vertical hole extending in the first direction, and
   a lateral hole provided in a bottom portion of the groove portion, the lateral hole extending in the second direction and connecting the vertical hole and an outside of the shaft portion.

In a banjo bolt according to a second aspect of the present disclosure, the groove portion includes a cross section intersecting the center line, the cross section being substantially uniform from one end to the other end in the first direction.

According to a banjo bolt of a third aspect of the present disclosure, in the banjo bolt of the first aspect or the second aspect, assuming that a portion constituting a bottom portion of the groove portion of the shaft portion is a thin portion, and that a portion other than the thin portion of the shaft portion is a thick portion, a ratio of a thickness of the thin portion to a thickness of the thick portion is larger than zero and smaller than 1.

According to the banjo bolt 1 of a fourth aspect of the present disclosure is, in the banjo bolt according to any one of the first to third aspects, a ratio of the lateral hole to the bottom portion of the groove portion when viewed along the first direction is larger than zero and equal to or smaller than 1.

According to the banjo bolt 1 of a fifth aspect of the present disclosure, in the banjo bolt according to any one of the first to fourth aspects, the shaft portion includes a plurality of the groove portions, and the plurality of the groove portions are located symmetrically with respect to the center line.

By appropriately combining arbitrary embodiments or modifications among the various embodiments or modifications described above, it is possible to achieve the effects of the respective embodiments. In addition, combinations of embodiments, combinations of examples, or combinations of embodiments and examples are possible, and combinations of features in different embodiments or examples are also possible.

Although the present disclosure has been sufficiently described in connection with preferred embodiments with reference to the accompanying drawings, various modifications and corrections are apparent to those skilled in the art. Such modifications and corrections should be understood to be included within the scope of the present disclosure according to the scope of the appended claims as long as they do not depart therefrom.

### REFERENCE SIGNS LIST

- 1: banjo bolt
- 10: head portion
- 12: screw head
- 14: flange
- 20: shaft portion
- 21: peripheral wall portion
- 211: thin portion
- 212: thick portion
- 22: vertical hole
- 222: opening
- 223: groove portion
- 224: bottom portion
- 24: lateral hole
- 25: external threaded portion

## Claims

1. A banjo bolt (1), comprising:
a head portion (10); and
a cylindrical shaft portion (20) including a vertical hole (22), the vertical hole extending in a first direction and being provided inside the shaft portion, wherein
the head portion is connected to a first end of the shaft portion in the first direction,
an opening (222) connected to the vertical hole is provided at a second end of the shaft portion in the first direction, and
the shaft portion includes
at least one groove portion (223) provided on an inner surface of the vertical hole, the groove portion extending along the first direction, and being recessed in a second direction intersecting the first direction and in a direction away from a center line of the vertical hole extending in the first direction, and
a lateral hole (24) provided in a bottom portion (224) of the groove portion, the lateral hole extending in the second direction and connecting the vertical hole and an outside of the shaft portion.

2. The banjo bolt according to claim 1, wherein
the groove portion (223) includes a cross section intersecting the center line, the cross section being substantially uniform from one end to the other end in the first direction.

3. The banjo bolt according to claim 1 or 2, wherein
assuming that a portion constituting a bottom portion of the groove portion of the shaft portion (20) is a thin portion, and that a portion other than the thin portion of the shaft portion is a thick portion, a ratio of a thickness of the thin portion to a thickness of the thick portion is larger than zero and smaller than 1.

4. The banjo bolt according to any one of claims 1 to 3, wherein
a ratio of the lateral hole (24) to the bottom portion (224) of the groove portion when viewed along the first direction is larger than zero and equal to or smaller than 1.

5. The banjo bolt according to any one of claims 1 to 4, wherein
the shaft portion (20) includes a plurality of the groove portions, and the plurality of the groove portions are located symmetrically with respect to the center line.

## Patentansprüche

1. Banjoschraubenbolzen (1), umfassend:
einen Kopfabschnitt (10); und
einen zylindrischen Schaftabschnitt (20), der ein vertikales Loch (22) enthält, wobei sich das vertikale Loch in einer ersten Richtung erstreckt und innerhalb des Schaftabschnitts bereitgestellt ist, wobei
der Kopfabschnitt mit einem ersten Ende des Schaftabschnitts in der ersten Richtung verbunden ist,
eine Öffnung (222), die mit dem vertikalen Loch verbunden ist, an einem zweiten Ende des Schaftabschnitts in der ersten Richtung bereitgestellt ist, und
der Schaftabschnitt Folgendes enthält:
mindestens einen Nutabschnitt (223), der auf einer Innenoberfläche des vertikalen Lochs bereitgestellt ist, wobei sich der Nutabschnitt entlang der ersten Richtung erstreckt und in einer zweiten Richtung, die die erste Richtung schneidet, und in einer Richtung weg von einer Mittellinie des vertikalen Lochs, das sich in der ersten Richtung erstreckt, ausgespart ist, und
ein seitliches Loch (24), das in einem Bodenabschnitt (224) des Nutabschnitts bereitgestellt ist, wobei sich das seitliche Loch in der zweiten Richtung erstreckt und das vertikale Loch und ein Äußeres des Schaftabschnitts verbindet.

2. Banjoschraubenbolzen nach Anspruch 1, wobei
der Nutabschnitt (223) einen Querschnitt enthält, der die Mittellinie schneidet,
wobei der Querschnitt von einem Ende zu dem anderen Ende in der ersten Richtung im Wesentlichen gleichmäßig ist.

3. Banjoschraubenbolzen nach Anspruch 1 oder 2, wobei
unter der Annahme, dass ein Abschnitt, der einen Bodenabschnitt des Nutabschnitts des Schaftabschnitts (20) bildet, ein dünner Abschnitt ist, und dass ein Abschnitt, der von dem dünnen Abschnitt des Schaftabschnitts verschieden ist, ein dicker Abschnitt ist, ein Verhältnis einer Dicke des dünnen Abschnitts zu einer Dicke des dicken Abschnitts größer als Null und kleiner als 1 ist.

4. Banjoschraubenbolzen nach einem der Ansprüche 1 bis 3, wobei
ein Verhältnis des seitlichen Lochs (24) zu dem Bodenabschnitt (224) des Nutabschnitts, wenn entlang der ersten Richtung betrachtet, größer als Null und gleich oder kleiner als 1 ist.

5. Banjoschraubenbolzen nach einem der Ansprüche 1 bis 4, wobei
der Schaftabschnitt (20) eine Vielzahl der Nutabschnitte enthält und die Vielzahl der Nutabschnitte symmetrisch in Bezug auf die Mittellinie angeordnet sind.

## Revendications

1. Boulon creux (1) comprenant :
une partie tête (10) ; et
une partie tige cylindrique (20) comprenant un trou vertical (22), le trou vertical
s'étendant dans une première direction et étant prévue à l'intérieur de la partie tige, ladite partie tête étant reliée à une première extrémité de la partie tige dans la première direction, une ouverture (222),
reliée au trou vertical étant prévue au niveau d'une seconde extrémité de la partie tige dans la première direction, et ladite partie tige comprenant
au moins une partie rainure (223) prévue sur une surface interne du
trou vertical, la partie rainure s'étendant le long de la première direction, et étant en retrait dans une seconde direction coupant la première direction et dans une direction s'éloignant d'une ligne centrale du trou vertical s'étendant dans la première direction, et un trou latéral (24)
prévu dans une partie inférieure (224) de la partie rainure, le trou latéral s'étendant dans la seconde direction et reliant le trou vertical et un extérieur de la partie tige.

2. Boulon creux selon la revendication 1,
ladite partie rainure (223) comprenant une section transversale coupant la ligne centrale,
ladite section transversale étant sensiblement uniforme d'une extrémité à l'autre dans la première direction.

3. Boulon creux selon la revendication 1 ou 2,
en supposant qu'une partie constituant une partie inférieure de la partie rainure de la partie tige (20) soit une partie mince, et qu'une partie autre que la partie mince de la partie tige soit une partie épaisse, un rapport d'une épaisseur de la partie mince sur une épaisseur de la partie épaisse étant supérieur à zéro et inférieur à 1.

4. Boulon creux selon l'une quelconque des revendications 1 à 3,
un rapport du trou latéral (24) sur la partie inférieure (224) de la partie rainure lorsqu'elle est vue le long de la première direction étant supérieur à zéro et inférieur ou égal à 1.

5. Banjo creux selon l'une quelconque des revendications 1 à 4,
ladite partie tige (20) comprenant une pluralité de parties rainures, et ladite pluralité de parties rainures étant situées symétriquement par rapport à la ligne centrale.
